# EUROPEAN PATENT APPLICATION

(11) **EP 1 052 586 A2**
(43) Date of publication of application: **15.11.2000**
(21) Application number: 00303943.5
(22) Date of filing: 10.05.2000
(51) Int. Cl.: G06F 17/60

(54) **Method and apparatus for achieving a quality standard**

(30) Priority: 10.05.1999 US 307857
(71) Applicant: GENERAL ELECTRIC COMPANY, Schenectady, NY 12345 (US)
(72) Inventor: Stanard, Christopher Leon, Niskayun, New York 12309 (US); Fitzgerald, John James, Clifton Park, New York 12065 (US); Osborn, Brock Estel, Niskayuna, New York 12309 (US)
(74) Representative: Goode, Ian Roy

(57) **Abstract**

A statistical process capability calculation method involves acquiring certain input information (102,104) for use in connection with the calculation process, establishing a mathematical model (114-120) based on the input data, using the mathematical model to perform certain statistical analyses and generating an output (122-126) based on the statistical analyses. The input information includes real world data regarding a parameter under consideration. The real world data is used to derive a statistical distribution and/or a transfer function. The resulting mathematical model is therefore closely correlated to actual production conditions. The mathematical model can be used to establish controls related to achieving a desired quality standard thereby reducing production costs.

## Description

The present invention relates in general to the use of statistics in relation to quality standards and, in particular, to developing statistical models based on real world product and process data so as to enhance the predictive ability of such models thereby improving quality control.

Due to increased competition, a desire to reduce costs associated with product defects, rigid tolerance requirements in certain manufacturing fields and other factors, many manufacturers are redoubling efforts to set and achieve high quality standards for manufactured products. For some manufacturers, these quality standards are reflected in quality control programs based on objective standards such as the so-called six sigma standard. The six sigma standard is a quality standard relating to the rate of defects or unacceptable products (i.e., products not within the specifications of the manufacturer or a customer) resulting from a manufacturing process. In particular, the six sigma standard specifies a particular defect rate of, for example, no more than 3.4 defects in a million opportunities, where an opportunity is a chance for a defect to occur. It will be appreciated that the definition of a particular standard relative to a defect rate may be subject to certain adjustments such as an empirically observed shift between short term and long term distributions for a particular variable.

In order to achieve the desired quality standards, considerable statistical analysis of manufacturing or other process characteristics, materials characteristics or other production/process parameters is often required. Such parameters vary depending on, among other things, the nature of the product/process under consideration but may include such things as: the speed of a processing line; the temperature, pressure or other processing variables at particular processing stations/steps; the material composition, material properties or dimensions of film layers or product pads; the time to answer phone calls in a customer service setting; etc. Such parameters include any parameter that may be controlled in order to achieve a desired quality standard.

Statistical analysis of these parameters generally recognizes that such parameters may vary over a universe of samples, i.e., actual processes and/or resulting products. Thus, for example, the pressure or temperature for a given manufacturing process step may vary within a range from sample to sample and it may be observed or suspected that such variation has an effect on the quality of the finished product and the resulting defect rate.

Such an effect can be quantified using a transfer function and a statistical distribution. Generally, a transfer function defines a relationship between an input, such as an input production parameter, and a desired output such as a quality specification defined as part of a quality standard. Conventionally, the transfer function as employed in statistical quality analyses is typically a linear function relating a single input variables to a single output quantity. The transfer function can be used to express product specifications of interest in terms of the process parameters or other values that can be controlled by the manufacturer.

A statistical distribution characterizes the distribution of samples relative to a range of values. Graphically, a distribution plots particular values of a variable against the number of samples within a particular universe of samples having the particular values. Statisticians have defined many distributions that are useful for statistical analysis including, for example, normal, uniform or Weibull distributions. Perhaps the most widely used of these distributions, as the name implies, is the normal distribution. A normal distribution is characterized in that most of the samples are close to an "average" value and fewer samples are close to the extremes of a value range. The result is the familiar "bell curve" shape of a normal distribution. Whatever the distribution, the distribution can be used to calculate values such as standard deviation that can be used by statisticians for purposes of control.

In the case of quality control, statisticians can utilize a statistical distribution to quantify variations in manufacturing process parameters or other parameters. The distribution can then be used together with a transfer function to quantify expected variations relative to product specifications. In this manner, a statistician can determine what degree of control is necessary with regard to the input parameters in order to guarantee a particular quality of a product or process.

Thus, for example, a product manufacturer may specify that a particular product will have a particular elasticity, plus or minus a particular range (e.g., 1%). A transfer function may indicate a relationship between input values, such as temperature and pressure of a processing step, to the desired output value of elasticity. Moreover, a normal distribution may be assumed, for the purposes of a conventional statistical analysis, with regard to variation of the input temperature and pressure values. Using all of this information, a statistician may determine what degree of temperature or pressure control is necessary to achieve a particular quality standard such as a six sigma standard, e.g., no more than 3.4 products per million outside of the elasticity specification in this case.

The present inventors have recognized that conventional statistical analyses can dramatically mischaracterize the degree of control, with regard to input parameters, that is necessary to achieve desired quality standards defined relative to output quality specifications. In this regard, the control specified by statisticians may be too rigid resulting in unnecessary expense or even threatening a product's commercial viability. Alternatively, the specified control may be too lax, resulting in a failure to maintain acceptable quality standards and customer dissatisfaction. It has been recognized that important sources of such error include diversions of assumed statistical distributions and transfer functions from real world data, e.g., actual samples reflecting the relationships between input product or process parameters and output quality specifications. In particular, such assumptions, which are embodied in a variety of conventional statistical tools and products, typically include an assumption of a normal or uniform distribution and an assumption of a linear transfer function. These assumptions tend to under predict product quality levels resulting in considerable expense directed to effecting controls that may be wholly or partially unnecessary. Such shortcomings are addressed in accordance with the present invention by developing a custom distribution and/or transfer function based on real world data to enhance the predictive ability of the resulting statistical models and reduce production costs.

According to one aspect of the present invention, real world data is used to derive a statistical distribution relating to one or more product or process parameters. The associated method includes the steps of obtaining real world data regarding a parameter for a product or process under consideration, employing a processor to derive the statistical distribution from the real world data and using the derived statistical distribution to establish a control relating to the desired quality standard. Such a control may relate, for example, to operating ranges for the parameter under consideration in order to achieve the quality standard. The real world data preferably includes a number of data samples representing particular instances of the product or process under consideration. For example, a data sample may include a value of the parameter for one instance of the product or process under consideration. The step of obtaining real world data can involve accessing a database or receiving manually entered data. With regard to a database of real world data, such data may be entered manually or automatically. In the latter regard, the database may be linked to a controller associated with equipment or the like such that values of the parameter are automatically stored in the database.

The step of employing a processor to derive a statistical distribution may involve deriving a custom distribution directly from the real world data or from the real world data together with certain predefined statistical distributions. A number of such predefined statistical distributions may be stored in a distribution library. The real world data can then be compared to such predefined statistical distributions in order to identify one of the predefined distributions that generally corresponds to the real world data. The predefined statistical distribution may further be modified to more closely match the real world data. For example, the distribution may be scaled, truncated or otherwise modified as appropriate. The step of using the derived statistical distribution may involve deriving a standard deviation or other value related to the distribution of the parameter. The distribution may be used in combination with a transfer function to derive a control related to achieving the desired quality standard. Such a transfer function may be linear or nonlinear and is preferably derived based on real world data as described below.

According to a further aspect of the present invention, real world data is used to derive a transfer function in connection with establishing a control related to achieving a desired quality standard. The transfer function generally relates one or more input parameters to an output quality characteristic. For example, the quality characteristic may relate to a specification of the manufacturer or a customer for the finished product. The associated method involves the steps of obtaining real world data regarding the parameter and the quality characteristic, analyzing the real world data to derive a transfer function relating the parameter to the quality characteristic, and using the transfer function to establish a control related to a quality standard. The real world data preferably includes sample data sets including a value of the parameter and an associated value related to the quality characteristic for a particular instance of the product or process under consideration. The step of analyzing the real world data may include performing a Monte Carlo simulation, performing a curve fitting operation or other mathematical operation for establishing the transfer function based on the real world data. The step of using the transfer function may involve using the transfer function together with information regarding a statistical distribution for the parameter and/or the desired quality standard in order to establish the control.

According to a further aspect of the present invention, an apparatus is provided for use in establishing a control related to achieving a desired quality standard. The apparatus generally includes a memory storing real world data regarding a parameter for a product or process under consideration, a processor for accessing the real world data and deriving a statistical tool related to the parameter based on the real world data, and an output device for providing an output (e.g., a distribution, a transfer function, a control value or values or other quality control information or graphical presentation thereof) based on the derived statistical tool. The statistical tool derived from the real world data can be a statistical distribution and/or a transfer function. In this manner, a model can be developed for achieving a quality standard based on real world data rather than potentially inaccurate assumptions relating to distributions and/or transfer functions.

The memory may further be configured to store a library of predefined statistical distributions that may be selected and modified as appropriate based on the real world data. In this regard, the processor may be operative for comparing the real world data to the predefined distributions to identify a distribution generally corresponding to the data. The output device can provide an output, for example, in a graphical, hard copy or electrical form, e.g., for transmission across a public or private network.

For a more complete understanding of the present invention, and further advantages thereof, reference is now made to the following detailed description taken in conjunction with the drawings, in which:
Fig. 1 is a flowchart illustrating a statistical process capability calculation method in accordance with the present invention; and
Fig. 2 is a processing system for implementing the method of Fig. 1.

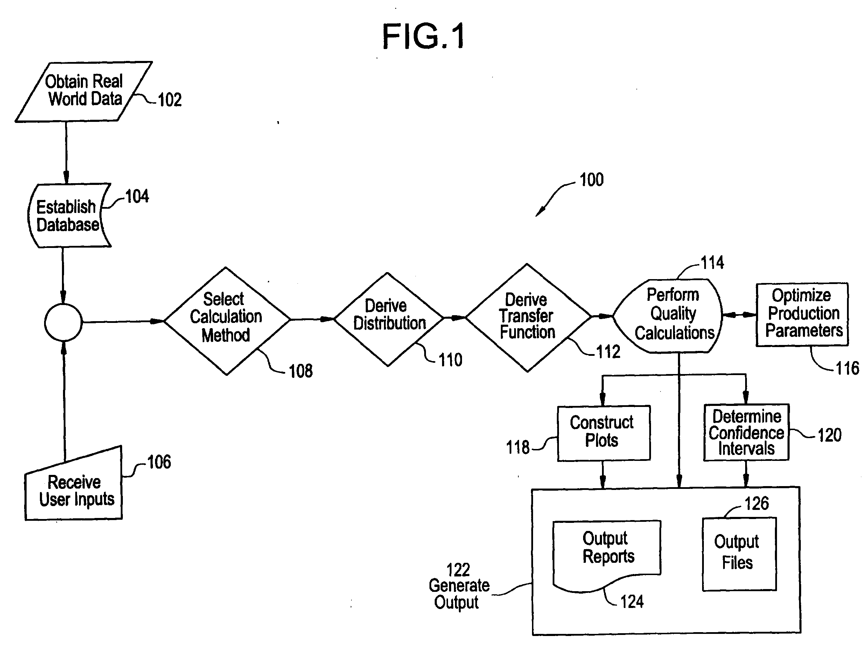

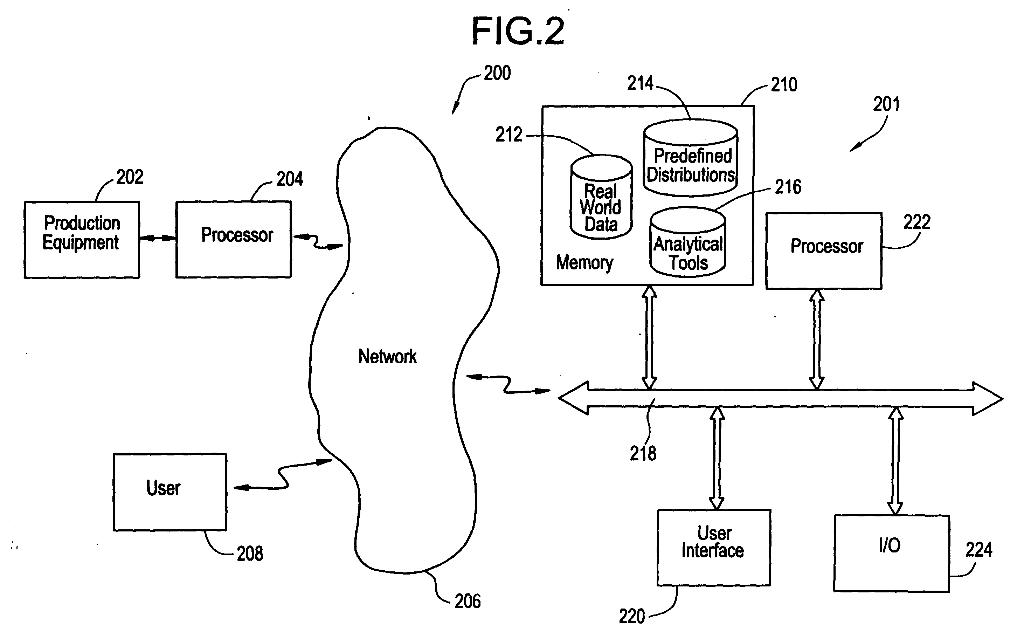

A particular implementation of the present invention will now be described by reference to the figures. In particular, Fig. 1 illustrates specific methodology for implementing various aspects of the invention. Fig. 2 illustrates a specific processing system for implementing the methodology of Fig. 1. Although the invention will thus be described in the context of a specific implementation, it will be appreciated that the various aspects of the invention are more broadly applicable with respect to other processes and systems.

Referring to Fig. 1, a statistical process capability calculation method is generally identified by the reference numeral 100. Generally, the method 100 involves acquiring certain input information for use in connection with the calculation process (steps 102 through 104 as described below), establishing a mathematical model based on the input data (steps 108 through 112) using the mathematical model to perform certain statistical analyses (steps 114 through 120) and generating an output based on the statistical analyses (steps 122 through 126). Each of these process steps is described in turn below.

The process 100 is initiated by receiving certain input information. Such input information provides real world data and user inputs for establishing the mathematical model. In this regard, it will be appreciated that user inputs may be used to determine the nature of the statistical analysis to be conducted. In accordance with the present invention, the real world data is used to develop the mathematical model for the statistical analysis rather than relying solely on certain assumptions regarding distributions and transfer functions. Accordingly, such real world data is input by obtaining (102) data on one or more product/process characteristics and establishing (104) a database based on the data. The specific type of data obtained will vary depending on the product or process under consideration as well as the type of analysis to be performed. For example, developing a particular product may involve a series of process steps where certain production parameters are controlled by the manufacturer. Such production parameters may include such things as the speed of a processing line; the temperature, pressure or other processing variables at particular processing stations/steps; the material composition, material properties or dimensions of film layers or product parts; etc. It will be appreciated, however, that the parameters under consideration need not be related to manufacturing. For example, the present invention may be used in connection with analyzing the operation of a marketing unit or service center, such as a customer service center or help desks. In such a case, the parameters under analysis may include time to answer calls, number of calls handled per agent, costs per agent, sales quotas, etc. Such parameters may be analyzed relative to any factor that is critical to quality. Any or all such parameters may be stored in a database. Preferably, such data is stored on a sample by sample basis, e.g., a value of the parameter is stored for each instance of the product or process under consideration. Thus, for example, a set of parameter values may be stored for each of a series of production runs, and may be indexed against an identifier for the production run. In addition, the database may store output quality characteristics corresponding to the production parameter data. Such quality characteristics, which again vary from application to application, may include, for example, any product or process qualities that are part of a specification of a manufacturer or customer. For example, if a manufacturer specifies that a particular finished product will have a particular elasticity, an elasticity value may be stored for each production run and indexed against an identifier for the production run.

The real world data may be entered manually or automatically. In this regard, an operator may record values of the various production parameters and/or quality characteristics and enter these values into the database via a keyboard or other input device. Alternatively, production equipment may be interfaced with the database via a processor in order to automatically report and stare such data in the database.

The input portion of the process 100 also involves receiving (106) user inputs. Many different types of user inputs may be accommodated in accordance with the present invention. For example, a user may wish to perform specific types of statistical analyses with respect to the product or process under consideration or may desire to receive specific kinds of outputs. With regard to types of statistical analyses, the user may desire to perform an analysis directed to determining an optimal value of certain production parameters relative to a desired output quality characteristic. To accomplish this, the user inputs may include an identification of the parameters to be optimized as well as a value of the desired quality characteristic. Alternatively, a user may wish to identify the required process parameters to obtain a particular quality standard. For example, the user may be interested in conforming to a six sigma standard specifying, for example, no more than 3.4 defects per million opportunities. It will be appreciated that many different types of standards may be supported in accordance with the present invention. Moreover, even for a particular quality control standard, definitions relative to defect rates may vary depending, for example, on whether distributions are shifted to reflect empirically observed or theoretically anticipated variations with respect to differences between long or short term time frames. In such a case, the user inputs may include an identification of the quality standard, an identification of the finished product specifications according to which defects are defined, and an identification of the various production parameters that may be treated as variables in performing the associated analysis. The user may also specify a calculation method to be employed such as a monte carlo method (including methods such as Latin hypercube sampling) or direct calculations from a distribution.

The user may also specify the nature or distribution of the outputs. Examples of the types of outputs that a user may wish to obtain may include a graphical representation of a derived distribution based on the real world data, an overlay or other graphical representation showing the fit between the real world data and the derived statistical distribution, a graphical representation of the underlying real world data in any of various formats, a mathematical expression of the derived transfer function, various statistical values of interest such as standard deviation Z-scores (including short term Z-scores, long term Z-scores and upper or lower Z-scores relative to a short term or long term period), defects per unit, goodness of fit statistics and histograms, error and warning messages, etc. The user may also specify how the outputs are to be distributed. In this regard, the user may direct that the output be printed or displayed at a particular user node, that the output be electronically distributed to various private network nodes associated with statisticians or others having an interest in the analysis, or the output may be made available to any authorized users upon request. It is also anticipated that the system of the present invention may be made available to external users via a public network, for example, on a subscription basis.

A mathematical model can then be derived based on these inputs. Generally, this model may include distributions and transfer functions that are derived based on the real world data. Such distributions and transfer functions can be used to establish controls related to a quality standard. For example, the controls may specify particular ranges for the various production parameters in order to achieve a quality standard such as a six sigma standard. The mathematical model is developed in the illustrated implementation by selecting (108) a calculation method, deriving (110) one or more distributions, and deriving (112) a transfer function. The calculation method may be selected based on user inputs or based on the type of analysis to be performed. Any of various conventional calculation methodologies may be employed including, for example, monte carlo methods, including methods as Latin hypercube sampling, or direct calculations from the distribution or distributions. The process of deriving a distribution generally involves deriving a mathematical representation, such as a function or set of functions, that match the real world data. Such functions may be derived directly from the real world data through curve fitting or other mathematical processes. Alternatively, the process of deriving a distribution may involve comparing the real world data to various predefined distribution models, selecting one of the predefined distribution models that generally corresponds to the real world data, and modifying the selected predefined distribution model to more closely conform to the real world data. In this regard, many different predefined distribution models may be stored in a distribution library. Many such distribution models are known including, for example, standard distribution models, uniform distribution models, Weibull distribution models and others. In order to provide the best fit relative to the real world data, many predefined distribution models, for example, sixteen or more models, are preferably stored in the distribution library. The real world data for a particular production parameter can then be iteritively compared to the predefined models contained in the library using a goodness of fit or other conventional mathematical analysis.

An important part of the present invention is the recognition that the predefined distribution models may need to be modified even in the case where a large number of distribution models are available. Among other things, the predefined distribution models may need to be modified in order to more closely conform to the real world data by scaling the distribution model, truncating the distribution model or accommodating mathematical singularities that appear with respect to the real world distribution. Scaling may involve, for example, flattening, stretching, reflecting asymmetries, or otherwise adapting the shape of the distribution to more closely conform to the real world data. A distribution may be truncated based on a recognition that a particular predefined distribution closely conforms to the real world data within a particular range of values for the production parameter under consideration, but not for other values of the parameter. For example, if the production parameter under consideration is elasticity, it may be found that the variation in elasticity of a material from sample to sample closely matches the normal, bell curve distribution up to a certain value of elasticity but, due to certain material properties, substantially no samples reflect an elasticity higher than the certain value. Accordingly, a bell curve truncated at the certain value may be employed for subsequent statistical analyses. Relatedly, the selected predefined statistical distribution may be modified to reflect mathematical singularities. In this regard, the above noted truncated bell curve reflects one type of mathematical singularity. It is also possible that the real world data will reflect a singularity in the form of a transition from one type of distribution to another type of distribution at a particular value of the production parameter under consideration or a sudden displacement of the distribution at a particular value of the production parameter under consideration. The invention also allows for transforming data, for example, to more closely match a predefined distribution model. In this regard, it may be useful to transform the data by taking a logarithm or square root of the input values or employing other mathematical transformations.

The illustrated process for deriving a mathematical model also preferably involves deriving a transfer function based on the real world data. The transfer function may be an equation, equation set or other mathematical algorithm relating one or more production parameters to one or more quality characteristics of the finished product. As noted above, conventional statistical tools tend to assume, linearity with regard to the transfer function. In the illustrated implementation of the present invention, the transfer function is derived directly from the input data and, as a result, may be linear or nonlinear. In this regard, the transfer function is preferably derived based on input data sets including values of one or more production parameters and corresponding values of one or more quality characteristics (for example, for the same production run). A transfer function matching the input data can then be derived using curve fitting programs or other conventional mathematical processes. It will thus be appreciated that the resulting transfer function may be linear or nonlinear, and may be based on a single variable or be multivariate.

The resulting mathematical model, including the derived statistical distribution(s) and the derived transfer function can then be used to perform (114) quality calculations as desired. Any of various conventional statistical calculations based on distributions and transfer functions can be supported in accordance with the present invention. Examples of such calculations include mean calculations, median calculations, defects per unit calculations, standard deviation calculations, process capability calculations (C_{P}) z-value calculations and the like. In addition, the process may involve performing (116) optimization routines. For example, the derived distribution transfer function and input information can be utilized to determine an optimal value for a particular production parameter, where such optimization may be determined relative to reducing costs, optimizing product quality, or enhancing production capabilities. The quality calculations may also involve deriving the information necessary to support output distribution graphs, histograms, overlays, transfer function graphs, and the like. Such information can be used to construct (118) output plots and determine (120) confidence intervals for standard deviation, z-values for characterizing quality levels, defects per unit values and other values as desired.

Based on this analysis, various types of outputs may be generated (122). In the illustrated implementation, such outputs include reports (124) and files (126). The reports may be printed or displayed graphically and may include many of the various types of outputs described above. The output files are generally electrically stored and/or transmitted to other nodes of a public or private network.

Fig. 2 shows an embodiment of a system for implementing the process of Fig. 1. The system 200 generally includes a statistical analysis unit 201 that is interfaced with production equipment 202 and one or more external users 208 via a public or private network 206. As noted above, values of various production parameters may be automatically stored in a database. In this regard, in the illustrated embodiment, production equipment 202 is interfaced with the statistical analysis unit 201 via a processor 204 and network 206. The processor 204 may perform a variety of functions including receiving signals from the production equipment 202, converting the signals into digital values, associating the digital values with production run and production equipment identifiers, and transmitting the data across the network to the unit 201.

The statistical analysis unit 201 generally includes a memory 210, a processor 222, a user interface 220 and an input/output subsystem 224 all interfaced via a system bus 218. The memory stores various information for use in deriving a mathematical model and using the mathematical model for performing various statistical analyses. In this regard, the illustrated memory includes a database of real world data 212, a library of predefined distributions 214, and a library of analytical tools 216. The real world data may include values of production parameters and values of output quality characteristics all indexed against production run identifiers or other sample identifiers. The predefined distribution library 214 preferably includes a number (e.g., 16 or more,) of predefined distribution models as discussed above. The analytical tools library 216 may include various conventional mathematical routines for use in deriving the mathematical model and employing the mathematical model to perform statistical analyses. For example, such analytical tools may include a monte carlo routine, a curve fitting routine, and other standard routines for performing calculations of values such as mean values, median values, confidence intervals, z-values, defects per unit values, standard deviation values, etc. In addition, the analytical tools library can include various graphics modules for generating graphs, histograms and the like.

The processor 222 is operative for accessing the real world data 212, predefined distributions 214 and analytical tools in order to perform the various statistical analyses as described above. The user interface 220 allows a user to input information via a keyboard or other input device, for example, to identify the type of analysis to be performed, the type of output desired, and/or how the output should be distributed. The input/output subsystem 224 supports various 1/0 equipment for handling inputs (e.g., of data via the network 206) and outputs to display devices, printers, or network ports. In the illustrated embodiment, one or more external users 208 can access the unit 201 via the network 206 in order to perform statistical analyses and/or receive outputs. Especially in the case of a public network, such users may access the unit 201 on a subscription basis in order to make use of the analytical tools embodied in the unit 201 as described above.

For completeness, various aspect of the invention are set out in the following clauses:-
1 . A method for use in establishing a control related to achieving a desired quality standard, comprising:
   obtaining real world data regarding a parameter concerning one of a product and a process under consideration;
   employing a processor to derive from the real world data a statistical tool related to the parameter, the tool including one of a statistical distribution and a transfer function; and
   using the derived statistical tool to establish said control relating to achieving said desired quality standard for the product or process under consideration.
2. The method as set forth in Clause 1, wherein said obtaining comprises accessing a database containing data sets including historical values of said parameter for particular instances of said product or process under consideration.
3. The method as set forth in Clause 2, wherein said obtaining comprises automatically storing said data sets by linking said database to a processor associated with said product or process under consideration.
4. The method as set forth in Clause 2, wherein said obtaining comprises manually storing said data sets via a user interface associated with said database.
5. The method as set forth in Clause 1, wherein said obtaining comprises accessing a database containing one of discrete and continuous data.
6. The method as set forth in Clause 1, further comprising receiving an input relating to said quality standard.
7. The method as set forth in Clause 6, wherein said receiving an input comprises receiving one of an identification of said parameter under analysis, an identification of an analysis technique to be employed in said analysis, and a specification relating to said parameter, and a defect rate.
8. The method as set forth in Clause 1, wherein said employing a processor to derive a statistical tool comprises fitting the real world data to one of a plurality of predefined statistical distribution models.
9. The method as set forth in Clause 1, wherein said employing a processor to derive a statistical tool comprises deriving a custom distribution model from said real world data.
10. The method as set forth in Clause 1, wherein said employing a processor to derive a statistical tool comprises deriving a custom distribution model including a truncated distribution, wherein said truncated distribution reflects a truncation relative to certain values of said parameter based on said real world data.
11. The method as set forth in Clause 1, wherein said employing a processor to derive a statistical tool comprises deriving a statistical distribution reflecting a mathematical singularity relative to a value of said parameter.
12. The method as set forth in Clause 1, wherein said using said derived statistical distribution comprises implementing a nonlinear transfer function relating to said quality standard based on said derived statistical tool.
13. The method as set forth in Clause 1, wherein said using said derived statistical tool comprises providing a graphical output concerning said derived tool for enhanced visualization.
14. The method as set forth in Clause 1, wherein said using said derived statistical tool comprises providing one of a goodness of fit statistics output and a histogram output reflecting said real world data.
15. The method as set forth in Clause 1, wherein said using said derived statistical tool comprises providing one of an error or warning message to assist users in implementing said derived statistical tool.
16. The method for use in establishing a control related to achieving a desired quality standard, comprising:
   accessing a database of real world data regarding a first parameter concerning one of a product and process under consideration;
   accessing a library containing a plurality of statistical distributions;
   comparing the accessed real world data to the plurality of statistical distributions to select a statistical distribution generally corresponding to the real world data; and
   using the selected distribution and a transfer function, relating said first parameter to an output quality characteristic, to determine said control related to achieving said desired quality standard.
17. The method as set forth in Clause 16, further comprising modifying said selected statistical distribution to establish a custom statistical distribution based on said real world data.
18. The method as set forth in Clause 17, wherein said modifying comprises truncating said selected statistical distribution relative to certain values of said first parameter based on real world data.
19. The method as set forth in Clause 17, wherein said modifying comprises defining said custom statistical distribution so as to reflect a mathematical singularity at a particular value of said first parameter.
20. The method as set forth in Clause 16, wherein said transfer function expresses an output quality characteristic subject to said quality standard as a function of said first parameter and a second parameter, and said using the selected distribution comprises using the selected distribution in combination with a second distribution to determine said control.
21. An apparatus for use in establishing a control related to achieving a desired quality standard, comprising:
   a memory storing real world data regarding a parameter concerning one of a product and process under consideration;
   a first processor for accessing said real world data and deriving a statistical tool related to the parameter based on the real world data, said statistical tool including one of a statistical distribution and a transfer function; and
   output means for providing an output based on the derived statistical tool wherein the output can be used to determine said control relative to said parameter so as to achieve said desired quality standard.
22. The apparatus as set forth in Clause 21, wherein said memory further stores a library including a plurality of predefined statistical distributions.
23. The apparatus as set forth in Clause 22, wherein said first processor is operative for deriving a custom statistical distribution by comparing said real world data to said plurality of predefined distributions.
24. The apparatus as set forth in Clause 22, wherein said first processor is operative for deriving said custom statistical distribution by selecting one of said plurality of predefined statistical distributions and modifying said selected predefined statistical distribution based on said real world data.
25. The apparatus set forth in Clause 21, wherein said output means comprises graphical means for providing graphical output based on the derived statistical tool.
26. The apparatus as set forth in Clause 21, wherein said output means comprises network means for electronically transmitting said output across a network.
27. The apparatus as set forth in Clause 21, further comprising interface means for interfacing said memory with a second processor associated with said product or process under consideration so as to automatically store said real world data.

## Claims

1. A method for use in establishing a control related to achieving a desired quality standard, comprising:
obtaining real world data regarding a parameter concerning one of a product and a process under consideration;
employing a processor to derive from the real world data a statistical tool related to the parameter, the tool including one of a statistical distribution and a transfer function; and
using the derived statistical tool to establish said control relating to achieving said desired quality standard for the product or process under consideration.

2. The method as set forth in Claim 1, wherein said obtaining comprises accessing a database containing data sets including historical values of said parameter for particular instances of said product or process under consideration.

3. The method as set forth in Claim 1, further comprising receiving an input relating to said quality standard.

4. The method as set forth in Claim 1, wherein said employing a processor to derive a statistical tool comprises fitting the real world data to one of a plurality of predefined statistical distribution models.

5. The method as set forth in Claim 1, wherein said employing a processor to derive a statistical tool comprises deriving a custom distribution model from said real world data.

6. The method as set forth in Claim 1, wherein said using said derived statistical tool comprises providing a graphical output concerning said derived tool for enhanced visualization.

7. The method for use in establishing a control related to achieving a desired quality standard, comprising:
accessing a database of real world data regarding a first parameter concerning one of a product and process under consideration;
accessing a library containing a plurality of statistical distributions;
comparing the accessed real world data to the plurality of statistical distributions to select a statistical distribution generally corresponding to the real world data; and
using the selected distribution and a transfer function, relating said first parameter to an output quality characteristic, to determine said control related to achieving said desired quality standard.

8. The method as set forth in Claim 7, further comprising modifying said selected statistical distribution to establish a custom statistical distribution based on said rear world data.

9. An apparatus for use in establishing a control related to achieving a desired quality standard, comprising:
a memory storing real world data regarding a parameter concerning one of a product and process under consideration;
a first processor for accessing said real world data and deriving a statistical tool related to the parameter based on the real world data, said statistical tool including one of a statistical distribution and a transfer function; and
output means for providing an output based on the derived statistical tool wherein the output can be used to determine said control relative to said parameter so as to achieve said desired quality standard.

10. The apparatus as set forth in Claim 9, wherein said memory further stores a library including a plurality of predefined statistical distributions.
